# EUROPEAN PATENT SPECIFICATION

(11) **EP 2 588 530 B1**
(45) Date of publication and mention of the grant of the patent: **11.11.2015**
(21) Application number: 11731207.4
(22) Date of filing: 28.06.2011
(51) Int. Cl.: C08L 67/02, C08L 33/08

(54) **ABRASION RESISTANT AND FLAME RETARDANT THERMOPLASTIC VULCANIZATE COMPOSITIONS**
ABRIEBFESTE UND FLAMMHEMMENDE THERMOPLASTISCHE VULKANISATZUSAMMENSETZUNGEN
COMPOSITIONS DE VULCANISAT THERMOPLASTIQUE IGNIFUGEANTES ET RÉSISTANT À L'ABRASION

(30) Priority: 29.06.2010 US 359501 P
(43) Date of publication of application: 08.05.2013
(73) Proprietor: E. I. du Pont de Nemours and Company, Wilmington, DE 19898 (US)
(72) Inventor: KARAYIANNI, Eleni, CH-1206 Geneva (CH)
(74) Representative: Morf, Jan Stefan
(86) International application number: PCT/US2011/042083
(87) International publication number: WO 2012/003163

(56) References cited:
- WO-A1-2008/060549
- US-B1- 6 179 008

## Description

### FIELD OF THE INVENTION

The present invention relates to flame retardant thermoplastic vulcanizate compositions having improved abrasion resistance and strip force. In addition, the invention relates to wire and cable coated with these compositions.

### BACKGROUND OF THE INVENTION

Thermoplastic vulcanizates (TPVs) are polymer blend compositions composed of a continuous thermoplastic phase and a dispersed vulcanized elastomer phase. TPVs combine many desirable characteristics of crosslinked (i.e. vulcanized) rubbers with certain characteristics of thermoplastic resins. For example, TPVs can be melt processed utilizing thermoplastic resin processing equipment, such as for example extruders. As a result of their excellent tear strength, tensile strength, flex life, chemical resistance and broad end-use temperature ranges, TPVs, especially copolyetherester TPVs such as those described in Int'l. Pat. App. Pub. No. WO 2004/029155, are used in a wide range of applications including manufacture of articles for use in the automotive, wire and cable, fluid power, electrical/electronic, hose and tubing, and appliance fields.

A specific example of the use of such TPVs is in the manufacture of insulating layers for wire and cable applications in the automotive industry. The wire and cable coating not only provides electrical insulation but also imparts mechanical, chemical and physical protection. Because temperatures in excess of 150°C are often reached in the underhood compartments of automobiles, temperature specifications for wire and cable insulation materials are constantly increasing. Further, in this highly demanding application it is necessary that the insulation material meet additional requirements including flame retardancy, abrasion resistance, thermal resistance and high elongation.

Polyvinyl chloride (PVC) is the most widely used material for wire and cable insulation. However, in many instances, PVC is perceived as an environmental threat. It would be desirable to have a halogen-free, high temperature resistant thermoplastic material available as an alternative automotive wire and cable insulation material.

Compositions based on TPVs have been proposed as coatings and covers for wire and cable. Int'l. Pat. App. Pub. No. WO 2008/060549 discloses a non-halogenated flame retardant composition comprising a thermoplastic polyester-based vulcanizate. This flame retardant TPV composition is said to be advantageously used to protect, coat or insulate cables and wires in the automotive industry where an outstanding balance of properties is desired that includes good resistance to environmental conditions, excellent resistance to a variety of fluids (e.g. gasoline, oil, transmission fluid, power steering fluid, radiator fluid, lubricating greases and the like) and flexibility sufficient to enable manipulation and bending of the material without damage or deterioration. Over time, wire and cable coating and insulation mamterials are subjected to friction and abrading forces with the result that articles made of the disclosed non-halogenated flame retardant TPV compositions may be susceptible to damage. In addition to the low abrasion resistance of currently available non-halogenated flame retardant TPV compositions, such as those disclosed in Int'l. Pat. App. Pub. No. WO 2008/060549, the use of such compositions, which contain phosphinate flame-retardants, has the disadvantage that such compositions adhere so strongly to wire or cable materials that strippability is reduced. As a result, the TPV coating cannot be easily removed either by hand or through use of simple tools. Cable laying operations are thereby rendered more difficult. It would be desirable to have alternative TPV compositions available that do not exhibit such strong adhesion between the insulating layer and wire so that stripping of the insulating layer is easily accomplished and excessive wire and/or insulating layer damage during stripping and installation is avoided.

There is a need for a flame retardant thermoplastic vulcanizate composition that combines good abrasion resistance and good strip characteristics but which also exhibits excellent mechanical properties.

### SUMMARY OF THE INVENTION

The present invention is directed to a flame retardant composition comprising
A. a thermoplastic vulcanizate composition comprising:
   1. from 5 to 75 weight percent of a continuous phase comprising at least one thermoplastic polyester; and
   2. from 25 to 85 weight percent of a dispersed phase comprising at least one peroxide-cured elastomer selected from the group consisting of polyacrylate rubbers, polymethacrylate rubbers, polyethylene/polyacrylate rubbers, and polyethylene/polymethacrylate rubbers; wherein said rubber is dynamically crosslinked with at least one peroxide free radical initiator and at least one organic multiolefinic co-agent;
   the weight percentages of the continuous phase and the dispersed phase being based on the total combined weight of the continuous and dispersed phases,
B. from 1 to 30 weight percent, based on the total weight of the flame retardant composition, of at least one flame retardant selected from the group consisting of phosphinates of formula I, diphosphinates of formula II, polymers thereof and combinations of two or more thereof 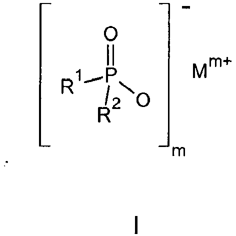 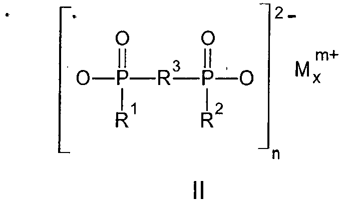 wherein R¹ and R² are independently selected from the group consisting of hydrogen, linear or branched C₁ -C₆ alkyl groups, and aryl groups; R³ is a linear or branched C₁-C₁₀-alkylene group, a C₆-C₁₀-arylene group, a C₆-C₁₀-alkylarylene or a C₆-C₁₀-arylalkylene group; M is a metal ion selected from the group of calcium ions, magnesium ions, aluminum ions, zinc ions, and mixtures thereof, m is 2 to 3; n is 1 or 3; and x is 1 or 2 with the proviso that when m is 2, then x and n are each 1, and when m is 3, x is 2 and n is 3; and
C. from 0.05 to 1.75 weight percent, based on the total weight of the flame retardant composition, of an ultra-high molecular weight polysiloxane.

Further described herein are articles comprising the flame retardant composition of the invention.

Also described herein are wires or cables comprising a coating comprising the flame-retardant composition described herein.

Also described herein are uses of an ultra-high molecular weight polysiloxane as an additive in a flame retardant composition comprising a) the thermoplastic vulcanizate described above and b) the at least one flame retardant described above for improving the abrasion resistance of an insulating layer comprising said composition and the ultra-high molecular weight siloxane.

Also described herein are methods for improving the abrasion resistance of an insulating layer made of a flame retardant composition comprising a) the thermoplastic vulcanizate described above and b) the at least one flame retardant described herein, said method comprising a step of melt blending an ultra-high molecular weight polysiloxane with the thermoplastic vulcanizate and the at least one flame retardant.

### DETAILED DESCRIPTION

The following definitions are to be used to interpret the meaning of the terms discussed in the description and recited in the claims.

As used herein, the term "a" refers to one as well as to at least one and is not an article that necessarily limits its referent noun to the singular.

As used herein, the term "about" is intended to mean that the amount or value in question may be the value designated or some other value that is approximately the same. The phrase is intended to convey that similar values promote equivalent results or effects according to the invention

As used herein, the term "(meth)acrylic acid" refers to methacrylic acid and/or acrylic acid; the term "(meth)acrylate" refers to methacrylate and/or acrylate and the term "poly(meth)acrylate refers to polymers derived from the polymerization of methacrylate and/or acrylate monomers.

As used herein, the term "ultra-high molecular weight polysiloxane" refers to a polysiloxane having a weight average molecular weight (Mw) of at least 100,000, the weight average molecular weight (Mw) being determined by gel permeation chromatography (GPC).

As used herein, the term "thermoplastic polyester" includes thermoplastic polyester elastomers as well as non-elastomeric thermoplastic polyesters.

As used herein, the term "acrylate rubber" refers to poly(meth)acrylate or polyethylene/(meth)acrylate rubber.

The abrasion resistant flame retardant compositions of the invention comprise a blend of a melt-processable thermoplastic vulcanizate (TPV) composition, a non-halogenated flame retardant composition and an ultra-high molecular weight polysiloxane composition. The melt-processable TPV is preferably present in an amount of 70 to 98 weight percent, the weight percentage being based on the total weight of the flame retardant composition. The non-halogenated flame retardant is present in an amount of from 1 to 30 weight percent, or preferably 2 to 20 weight percent, or more preferably 3 to 15 weight percent, based on the total weight of the flame retardant composition. The ultra-high molecular weight polysiloxane is present in an amount of 0.05 to 1.75 weight percent, the weight percentage being based on the total weight of the flame retardant composition.

The TPV component of the flame retardant composition of the invention is a multi-phase polymer composition. TPVs are blends composed of a thermoplastic continuous phase and a vulcanized elastomer dispersed phase. The dispersed phase is dispersed within and throughout the continuous phase. The term "vulcanizate" and the phrase "vulcanizate rubber" as used herein are intended to be generic to the cured or partially cured, crosslinked or crosslinkable rubber as well as to curable precursors of crosslinked rubber. These terms as used herein include elastomers, gum rubbers and so-called soft vulcanizates as commonly recognized in the art. Melt-processable TPV compositions useful in the present invention are described in U.S. Patent. No. 7,074,857, U.S. Patent Application Publication. No. 2005/084694 and International Patent Application. Publication. No. WO 2004/029155.

An example of a TPV is disclosed in International Patent Application Publication No. WO 2004/029155, which describes a curable thermoplastic blend comprising a polyalkylenephthalate polyester polymer or copolymer and a crosslinkable poly(meth)acrylate or polyethylene/(meth)acrylate vulcanizate rubber in combination with an effective amount of peroxide free-radical initiator and an organic multiolefinic co-agent to crosslink the rubber during extrusion or injection molding of the thermoplastic elastomeric blend. As used herein, the term "organic multiolefinic co-agent" refers to organic co-agents that contain two or more unsaturated double bonds, for example, diethylene glycol diacrylate, diethylene glycol dimethacrylate, N,N'-m-phenylene dimaleimide, triallylisocyanurate, trimethylolpropane trimethacrylate; tetraallyloxyethane; triallyl cyanurate; tetramethylene diacrylate and polyethylene glycol dimethacrylate. When the blend composition is melt extruded, the result is a TPV that can be processed in many ways like a thermoplastic, but which has characteristics of a crosslinked rubber. In contrast to conventional vulcanized (thermoset) elastomers, TPVs can reprocessed by injection molding or extrusion.

According to the present invention, the thermoplastic vulcanizate comprises (i) from 15 to 75 weight percent, or preferably from 15 to 60 weight percent, of at least one thermoplastic polyester that forms a continuous phase; and (ii) from 25 to 85 weight percent, or preferably from 40 to 85 weight percent of at least one poly(meth)acrylate or polyethylene/(meth)acrylate rubber that forms a dispersed phase, wherein the rubber is dynamically crosslinked with at least one peroxide free radical initiator and at least one organic co-agent having multiple olefinic unsaturated groups, the weight percentage of components (i) and (ii) being based on the total weight of (i) and (ii). Such thermoplastic vulcanizates are described in Int'l. Pat. App. Pub. Nos. WO 2004/029155 and WO 2008/060549.

Preferred thermoplastic polyesters are typically prepared by polymerization of one or more dicarboxylic acids (where herein the term "dicarboxylic acid" also refers to dicarboxylic acid derivatives such as esters) and one or more diols. In preferred polyesters the dicarboxylic acids comprise one or more of terephthalic acid, isophthalic acid, and 2,6-naphthalene dicarboxylic acid, and the diol component comprises one or more of HO(CH₂)ₙOH (I); 1,4-cyclohexanedimethanol; HO(CH₂CH₂O)ₘCH₂CH₂OH (II); and HO(CH₂CH₂CH₂CH₂O)_{z}CH₂CH₂CH₂CH₂OH (III), wherein n is an integer of 2 to 10, m on average is 1 to 4, and z is on average 7 to 40. Note that (II) and (III) may be a mixture of compounds in which m and z, respectively, may vary and that since m and z are averages, they need not be integers. Other dicarboxylic acids that may be used to form the thermoplastic polyester include sebacic and adipic acids. Hydroxycarboxylic acids such as hydroxybenzoic acid may be used as comonomers. Specific preferred polyesters include poly(ethylene terephthalate) (PET), poly(trimethylene terephthalate) (PTT), poly(1,4-butylene terephthalate) (PBT), poly(ethylene 2,6-naphthoate), and poly(1,4-cyclohexyldimethylene terephthalate) (PCT).

The thermoplastic polyester may be a thermoplastic polyester elastomer, such as a copolyetherester. Useful copolyetheresters are copolymers that have a multiplicity of recurring long-chain ester units and short-chain ester units joined head-to-tail through ester linkages, said long-chain ester units being represented by formula (A): 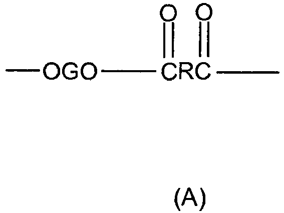 and said short-chain ester units being represented by formula (B): 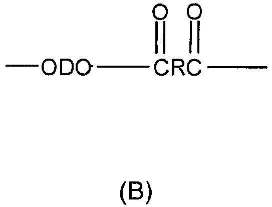 wherein
G is a divalent radical remaining after the removal of terminal hydroxyl groups from poly(alkylene oxide)glycols having a number average molecular weight of between 400 and 6000, or preferably between 400 and 3000;
R is a divalent radical remaining after removal of carboxyl groups from a dicarboxylic acid having a molecular weight of less than about 300;
D is a divalent radical remaining after removal of hydroxyl groups from a diol having a molecular weight less than about 250; and
wherein said copolyetherester(s) preferably contain from 15 to 99 weight percent short-chain ester units and 1 to 85 weight percent long-chain ester units, or wherein the copolyetherester(s) more preferably contain from 20 to 95 weight percent short-chain ester units and 5 to 80 weight percent long-chain ester units.

As used herein, the term "long-chain ester units" as applied to units in a polymer chain refers to the reaction product of a long-chain glycol with a dicarboxylic acid. Suitable long-chain glycols are poly(alkylene oxide) glycols having terminal (or as nearly terminal as possible) hydroxy groups and having a number average molecular weight of from 400 to 6000, and preferably from 600 to 3000. Preferred poly(alkylene oxide) glycols include poly(tetramethylene oxide) glycol, poly(trimethylene oxide) glycol, poly(propylene oxide) glycol, poly(ethylene oxide) glycol, copolymer glycols of these alkylene oxides, and block copolymers such as ethylene oxide-capped poly(propylene oxide) glycol. Mixtures of two or more of these glycols can be used.

As used herein, the term "short-chain ester units" as applied to units in a polymer chain of the copolyetheresters refers to low molecular weight compounds or polymer chain units having molecular weights less than about 550. They are made by reacting a low molecular weight diol or a mixture of diols (molecular weight below about 250) with a dicarboxylic acid to form ester units represented by Formula (B) above.

Included among the low molecular weight diols which react to form short-chain ester units suitable for use for preparing copolyetheresters are acyclic, alicyclic and aromatic dihydroxy compounds. Preferred compounds are diols with 2-15 carbon atoms such as ethylene, propylene, isobutylene, tetramethylene, 1,4-pentamethylene, 2,2-dimethyltrimethylene, hexamethylene and decamethylene glycols, dihydroxycyclohexane, cyclohexane dimethanol, resorcinol, hydroquinone, 1,5-dihydroxynaphthalene, and the like. Especially preferred diols are aliphatic diols containing 2-8 carbon atoms, and a more preferred diol is 1,4-butanediol. Included among the bisphenols which can be used are bis(p-hydroxy)diphenyl, bis(p-hydroxyphenyl)methane, and bis(p-hydroxyphenyl)propane. Equivalent ester-forming derivatives of diols are also useful (e.g., ethylene oxide or ethylene carbonate can be used in place of ethylene glycol or resorcinol diacetate can be used in place of resorcinol). As used herein, the term "diols" includes equivalent ester-forming derivatives such as those mentioned. However, any molecular weight requirements refer to the corresponding diols, not their derivatives.

Dicarboxylic acids that can react with the foregoing long-chain glycols and low molecular weight diols to produce the copolyetheresters are aliphatic, cycloaliphatic or aromatic dicarboxylic acids of a low molecular weight, i.e. having a molecular weight of less than about 300. The term "dicarboxylic acids" as used herein includes functional equivalents of dicarboxylic acids that have two carboxyl functional groups that perform substantially like dicarboxylic acids in reaction with glycols and diols in forming copolyetherester polymers. These equivalents include esters and ester-forming derivatives such as acid halides and anhydrides. The molecular weight requirement pertains to the acid and not to its equivalent ester or ester-forming derivative. Thus, an ester of a dicarboxylic acid having a molecular weight greater than 300 or a functional equivalent of a dicarboxylic acid having a molecular weight greater than 300 are included provided the corresponding acid has a molecular weight below about 300. The dicarboxylic acids can contain any substituent groups or combinations that do not substantially interfere with the copolyetherester polymer formation and use of the polymer in the compositions of this invention.

The term "aliphatic dicarboxylic acids," as used herein, refers to carboxylic acids having two carboxyl groups each attached to a saturated carbon atom. If the carbon atom to which the carboxyl group is attached is saturated and is in a ring, the acid is cycloaliphatic. Aliphatic or cycloaliphatic acids having conjugated unsaturation often cannot be used because of homopolymerization. However, some unsaturated acids, such as maleic acid, can be used.

Aromatic dicarboxylic acids, as the term is used herein, are dicarboxylic acids having two carboxyl groups each attached to a carbon atom in a carbocyclic aromatic ring structure. It is not necessary that both functional carboxyl groups be attached to the same aromatic ring and where more than one ring is present, the rings can be joined by aliphatic or aromatic divalent radicals or divalent radicals such as -O- or -SO₂-.

Representative useful aliphatic and cycloaliphatic acids that can be used include sebacic acid; 1,3-cyclohexane dicarboxylic acid; 1,4-cyclohexane dicarboxylic acid; adipic acid; glutaric acid; 4-cyclohexane-1,2-dicarboxylic acid; 2-ethylsuberic acid; cyclopentanedicarboxylic acid decahydro-1,5-naphthylene dicarboxylic acid; 4,4'-bicyclohexyl dicarboxylic acid; decahydro-2,6-naphthylene dicarboxylic acid; 4,4'-methylenebis(cyclohexyl) carboxylic acid; and 3,4-furan dicarboxylic acid. Preferred acids are cyclohexanedicarboxylic acids and adipic acid.

Representative aromatic dicarboxylic acids include phthalic, terephthalic and isophthalic acids; bibenzoic acid; substituted dicarboxy compounds with two benzene nuclei such as bis(p-carboxyphenyl)methane; *p*-oxy-1,5-naphthalene dicarboxylic acid; 2,6-naphthalene dicarboxylic acid; 2,7-naphthalene dicarboxylic acid; 4,4'-sulfonyl dibenzoic acid and C₁-C₁₂ alkyl and ring substitution derivatives thereof, such as halo, alkoxy, and aryl derivatives. Hydroxyl acids such as p-(beta-hydroxyethoxy)benzoic acid can also be used provided an aromatic dicarboxylic acid is also used.

Aromatic dicarboxylic acids are a preferred class for preparing the copolyetherester polymers useful for this invention. Among the aromatic acids, those with 8-16 carbon atoms are preferred, particularly terephthalic acid alone or with a mixture of phthalic and/or isophthalic acids.

The copolyetheresters preferably comprise 15 to 99 weight percent short-chain ester units corresponding to Formula (B) above, the remainder being long-chain ester units corresponding to Formula (A) above. The copolyetheresters more preferably comprise 20 to 95 weight percent, and even more preferably 50 to 90 weight percent short-chain ester units, where the remainder are long-chain ester units. More preferably, at least 70% of the groups represented by R in Formulae (A) and (B) above are 1,4-phenylene radicals and at least about 70% of the groups represented by D in Formula (B) above are 1,4-butylene radicals and the sum of the percentages of R groups which are not 1,4-phenylene radicals and D groups that are not 1,4-butylene radicals does not exceed 30%. If a second dicarboxylic acid is used to prepare the copolyetherester, isophthalic acid is preferred and if a second low molecular weight diol is used, ethylene glycol, 1,3-propanediol, cyclohexanedimethanol, or hexamethylene glycol are preferred.

A blend or mixture of two or more copolyetherester elastomers can be used as the thermoplastic polyester component in the compositions of the invention. The copolyetherester elastomers used in the blend need not come within the values disclosed hereinbefore for the elastomers on an individual basis. However, the blend of two or more copolyetherester elastomers must conform to the values described herein for the copolyetheresters on a weighted average basis. For example, in a mixture that contains equal amounts of two copolyetherester elastomers, one copolyetherester can contain 60 weight percent short-chain ester units and the other copolyetherester can contain 30 weight percent short-chain ester units for a weighted average of 45 weight percent short-chain ester units.

Preferably, the copolyetherester elastomers used as components in the compositions of the present invention are prepared from monomers comprising (1) poly(tetramethylene oxide) glycol, poly(trimethylene oxide) glycol and/or ethylene oxide-capped poly(propylene oxide) glycol, poly(tetramethylene oxide) glycol being preferred; (2) a dicarboxylic acid selected from isophthalic acid, terephthalic acid and mixtures thereof; and (3) a diol selected from 1,4-butanediol, 1,3-propanediol and mixtures thereof, or are prepared from esters of terephthalic acid, e.g. dimethylterephthalate, 1,4-butanediol and poly(alkylene oxide) glycol. More preferably, the copolyetherester elastomers are prepared from esters of terephthalic acid, e.g. dimethylterephthalate, 1,4-butanediol and poly(tetramethylene oxide) glycol.

Examples of suitable copolyetherester elastomers useful as the continuous phase of the thermoplastic vulcanizate component of the compositions of the invention are commercially available under the trademark Hytrel^{®} polyetherester elastomers from E. I. du Pont de Nemours and Company, Wilmington, Delaware.

The acrylate rubber component of the TPV compositions useful in compositions of the invention may be prepared by copolymerizing one or more (meth)acrylate monomers with one or more olefins. A preferred olefin is ethylene. As used herein, the term "crosslinked acrylate rubber" refers to the second component of the TPV component of the flame retardant compositions of the invention. Preferred acrylate rubbers include poly(alkyl (meth)acrylate) rubbers, ethylene/alkyl (meth)acrylate copolymer rubbers and poly(perfluoroalkyl (meth)acrylate) rubbers, and more preferably ethylene/alkyl (meth)acrylate copolymer rubbers where the alkyl group has from 1 to 4 carbons. Preferred ethylene/alkyl (meth)acrylate copolymers are those derived from less than about 80 weight percent of ethylene and more than about 20 weight percent alkyl (meth)acrylate.

The acrylate rubbers may optionally comprise additional repeat units derived from one or more functionalized comonomers, such as (meth)acrylate glycidyl esters (such as glycidyl methacrylate), maleic acid, maleic acid esters (such as monoethyl maleate) or other comonomers having one or more reactive groups including acid, hydroxyl, epoxy, isocyanates, amine, oxazoline, chloroacetate, or diene functionality. The acrylate rubbers may also be prepared from more than two (meth)acrylate monomers. Examples are acrylate rubbers made by polymerizing ethylene, methyl acrylate, and a second acrylate (such as butyl acrylate).

The melt processible TPV compositions useful in the invention may be prepared by mixing at least one of the above-described thermoplastic polyesters with at least one of the above-described acrylate rubbers in the presence of an organic peroxide free radical initiator and an organic diene (i.e. multiolefinic) co-agent. The resultant composition is then dynamically cured to produce a TPV having a crosslinked disperse phase within a thermoplastic continuous phase.

Suitable free-radical initiators include but are not limited to 2,5-dimethyl-2,5-di-(*t*-butylperoxy)hexyne-3; *t*-butyl peroxybenzoate; 2,5-dimethyl-2,5-di-(*t*-butylperoxy)hexane; dicumyl peroxide; α,α-bis(*t-*butylperoxy)-2,5-dimethylhexane; and the like and mixtures thereof.

Suitable organic multiolefinic co-agents include but are not limited to diethylene glycol diacrylate; diethylene glycol dimethacrylate; N,N'-m-phenylene dimaleimide; triallylisocyanurate; trimethylolpropane trimethacrylate; tetraallyloxyethane; triallyl cyanurate; tetramethylene diacrylate; polyethylene glycol dimethacrylate; and the like and mixtures thereof.

Thermoplastic vulcanizates used in the present invention may be prepared using processes such as those described in International Patent Publication WO 2004/029155. The actual mixing of components and subsequent dynamic crosslinking may be performed either in a batch mode or a continuous mode using conventional melt blending equipment.

The flame retardant composition described herein comprises at least one flame retardant (also referred to in the art as a flameproofing agent). Flame retardants are used in thermoplastic compositions to suppress, reduce, delay or modify the propagation of a flame through the composition or article made of the flame retardant composition. The at least one flame retardant is preferably present in the insulating composition described herein in an amount from 1 to 30 weight percent, more preferably 2 to 20 weight percent, and still more preferably 3 to 15 weight percent, the weight percent being based on the total weight of the flame retardant composition.

Preferably, the at least one flame retardant is a non-halogenated flame retardant and more preferably, it is selected from phosphinates of formula (C), diphosphinates of formula (D), polymers thereof and mixtures thereof: 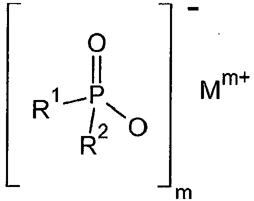 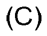 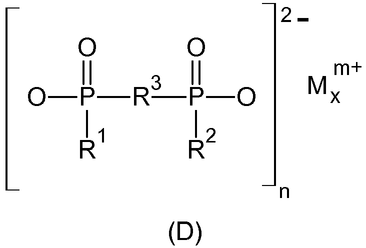 wherein each of R¹ and R² independently is hydrogen, linear C₁ -C₆ alkyl groups, branched C₁ -C₆ alkyl groups or an aryl group; R³ is a linear C₁-C₁₀-alkylene group, a branched C₁-C₁₀-alkylene group, a C₆-C₁₀-arylene group, an alkylarylene group or an arylalkylene group; M is a metal ion selected from calcium ion, magnesium ion, aluminum ion, zinc ion or mixtures thereof, m is 2 to 3; n is 1 or 3; and x is 1 or 2 with the proviso that when m is 2, then x and n are each 1, and when m is 3, x is 2 and n is 3; and optionally comprising condensation products of melamine and/or reaction products of melamine with phosphoric acid and/or reaction products of condensation products of melamine with phosphoric acid and/or comprising a mixture of these.

R¹ and R² are preferably hydrogen, methyl, ethyl, n-propyl, isopropyl, n-butyl, tert-butyl, n-pentyl and/or phenyl. R³ is preferably methylene, ethylene, n-propylene, isopropylene, n-butylene, tert-butylene, n-pentylene, n-octylene, n-dodecylene, or phenylene or naphthylene, or methylphenylene, ethylphenylene, tert-butylphenylene, methylnaphthylene, ethylnaphthylene or tert-butylnaphthylene, or phenylmethylene, phenylethylene, phenylpropylene or phenylbutylene. M is preferably aluminum or zinc.

Preferred phosphinates are metal salts of organic phosphinates, such as methylethylphosphinates and diethylphosphinates. More preferred are aluminum methylethylphosphinate, aluminum diethylphosphinate, zinc methylethylphosphinate, and zinc diethylphosphinate. Also preferred are aluminum phosphinate, magnesium phosphinate, calcium phosphinate, and zinc phosphinate.

The flame retardant can have any particle size distribution, as commonly understood and used by those having skill in the art, but preferably it has a particle size (D90 value) of less than or equal to 100 microns and more preferably less than or equal to 20 microns. The D90 value corresponds to a particle size below which 90 weight percent of the particles lie, wherein the particle size distribution is measured by the technique of laser diffraction from a suspension of particles in a solvent as determined using a Mastersizer 2000 particle size analyzer available from Malvern Instruments Ltd. This test method meets the requirements set forth in ISO 13320.

The flame retardant composition according to the present invention comprises an ultra-high molecular weight polysiloxane that is present in a particular concentration. The ultra-high molecular weight polysiloxane has a weight average molecular weight (Mw) of at least 100000, the weight average molecular weight (Mw) being determined by gel permeation chromatography (GPC).

The ultra-high molecular weight polysiloxane is present in the composition according to the present invention in an amount from 0.05 to 1.75 weight percent, the weight percentage being based on the total weight of the flame retardant composition.

An example of a preferred ultra-high molecular weight polysiloxane is an ultra-high molecular weight polysiloxane of formula (E): 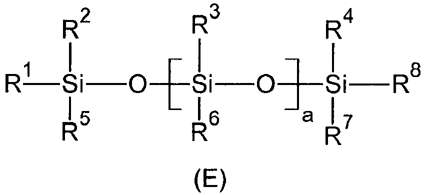 wherein R¹, R², R³, R⁴, R⁵, R⁶, R⁷ and R⁸ are independently selected from the group consisting ot alkyl, vinyl, chloroalkyl, fluororalkyl, aminoalkyl, epoxy, chloro, fluoro, or hydroxy groups, and a is 500 or greater, preferably 1000 or greater, more preferably from 1000 to 20000, and still more preferably from 1000 to 15000.

Preferably, the ultra-high molecular weight polysiloxane is a polydimethylsiloxane of formula (F), i.e. an ultra-high molecular weight polysiloxane wherein R², R³, R⁴, R⁵, R⁶ and R⁷ of formula (E) are methyl groups: 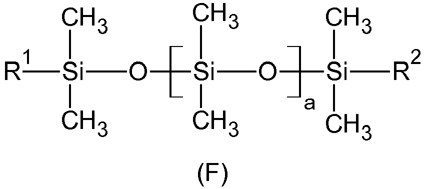 wherein R¹ and R² are independently alkyl, vinyl, chloroalkyl, aminoalkyl, epoxy, fluororalkyl, chloro, fluoro, or hydroxy groups, and a is 500 or greater, preferably 1000 or greater, more preferably from 1000 to 20000, and still more preferably from 1000 to 15000.

More preferably, the ultra-high molecular weight polysiloxane is a polydimethylsiloxane of formula (G), i.e. an ultra-high molecular weight polysiloxane wherein R², R³, R⁴, R⁵, R⁶ and R⁷ of formula (E) are methyl groups and wherein R¹ and R⁸ of formula (E) are vinyl groups: 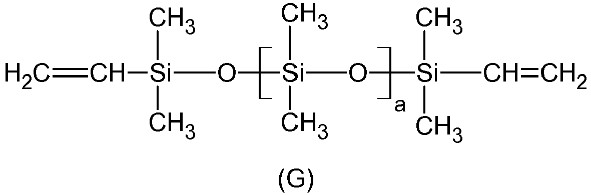 wherein a is 1350 or greater.

Even though the molecular weight of ultra-high molecular weight polysiloxanes is ultra-high, the flexibility and free volume of the siloxane chain allow the polymers to exist as fluids with viscosities increasing as molecular weight increases. Ultra-high molecular weight polysiloxanes are not crosslinked, flow like molten polymers and have viscosities in the 10 to 50 million mm²/s range.

Ultra-high molecular weight polysiloxanes are available in many different forms, e.g., as pure compositions, as compounds, as concentrates, or as masterbatches. Example of polymers into which the ultra-high molecular weight polysiloxanes can be compounded include polypropylene, polyethylene, polystyrene, polyamides, polyacetal, acrylonitrile-butadiene-styrene (ABS), polyester elastomer and copolyetherester elastomer. Typically, commercially available concentrates may contain the ultra-high molecular weight polysiloxane in a concentration ranging from 40 to 70 weight percent; however, any concentration is acceptable for purposes of the invention so long as the desired weight percent in the final product can be achieved.

Examples of suitable ultra-high molecular weight polysiloxanes are MB50-010 sold by Dow Corning Corporation. MB50-010 is a masterbatch of ultra-high molecular weight polysiloxane dispersed in a copolyetherester elastomer that is in a solid dry pellet form.

The compositions of the present invention may further comprise one or more amorphous polymers. In such compositions, the one or more amorphous polymers are preferably present in an amount from 1 to 30 weight percent, more preferably from 10 to 30 weight percent, and still more preferably from 15 to 25 weight percent, the weight percentage being based on the total weight of the flame retardant composition. The one or more amorphous polymers are preferably selected from polycarbonates, polyarylates, amorphous polyester copolymers, poly(methyl methacrylate) ("PMMA"), and mixtures thereof. Amorphous polymers do not crystallize, even upon annealing. Amorphous polymers are characterized by their glass transition temperature, Tg, which is the temperature at which the polymers are transformed from a glassy state to a rubbery state. More preferably, the one or more amorphous polymers are selected from polycarbonates, polyarylates and mixtures thereof. Polycarbonates are polymers which comprise carbonate linkages. Preferably, polycarbonates used in the present invention are aromatic polycarbonates, i.e. polymers which contain carbonate groups and aromatic moieties in the main polymer chain. Aromatic polycarbonates include homopolycarbonates, copolycarbonates, copolyestercarbonates and mixtures thereof. Preferably, the polycarbonates used in the present invention are high molecular weight polymers having a weight average molecular weight (Mw) from 8000 to 200000, the weight average molecular weight (Mw) being determined by gel permeation chromatography (GPC). Polycarbonates are produced by using a dihydroxydiarylalkane as the main starting material, including those wherein the alkane is branched. Such polycarbonates are manufactured by known processes, generally by reaction of a dihydroxy compound and/or a polyhydroxy compound with either phosgene or a diester of carbonic acid. More preferably, the polycarbonates used in the present invention are based on 4,4'-dihydroxy-2,2-diphenylpropane (i.e. bisphenol A, BPA) and are commonly referred to as bisphenol A polycarbonates. Polyarylates are polymers derived from the reaction of a polyhydroxy compound with a polycarboxylic acid compound, preferably from the reaction of one or more dihydroxy compounds with one or more polycarboxylic acid compounds, and more preferably from the reaction of one or more dihydroxy compounds with one or more dicarboxylic acid compounds. Examples of polyhydroxy compounds include without limitation bisphenols, dihydric phenol ethers, dihydroxyaryl sulfones, dihydroxy benzenes, halo- and alkyl-substituted dihydroxy benzenes. Examples of polycarboxylic acid compounds include without limitation monocyclic aromatic dicarboxylic acids such as for example benzenedicarboxylic acids including phthalic acid, isophthalic acid, terephthalic acid, o-, m-, and p-phenylenediacetic acids; bis(carboxyaryl)C₁₋₆alkanes; and polycyclic aromatic dicarboxylic acids such as for example diphenic acid and 1,4-naphthalic acid. More preferably, the polyarylates used in the present invention are derived from the reaction of 4,4'-dihydroxy-2,2-diphenylpropane (bisphenol A) and a mixture of isophthalic acid and terephthalic acid and still more preferably from the reaction of 4,4'-dihydroxy-2,2-diphenylpropane (bisphenol A) and a 50:50 mixture of isophthalic acid:terephthalic acid.

The flame retardant composition described herein may further comprise one or more heat stabilizers and/or antioxidants and/or metal deactivators (e.g. hydrazines, hydrazides and mixtures thereof). Preferably, the one or more heat stabilizers and/or antioxidants are selected from diphenylamines, amides, thioesters, phenolic antioxidants, phosphites and mixtures thereof. When used, the heat stabilizers and/or antioxidants are preferably present in an amount of from 0.01 to 5 weight percent, or more preferably from 0.01 to 3 weight percent, the weight percentage being based on the total weight of the flame retardant composition.

The flame retardant composition described herein may further comprise additional additives such as synergists, colorants, fillers and reinforcing agents, impact modifiers, conductive additives, viscosity modifiers, nucleating agents, plasticizers, drip suppressants, and adhesion modifiers.

Fillers, modifiers and other ingredients described above may be present in the flame retardant composition in amounts and in forms well known in the art, including in the form of so-called nano-materials where at least one of the dimensions of the particles is in the range of 1 to 1000 nm.

The flame retardant compositions are melt-mixed blends, wherein all of the polymeric components are well-dispersed within each other and all of the non-polymeric ingredients are well-dispersed in and bound by the polymer matrix, such that the blend forms a unified whole. Any melt-mixing method may be used to combine the polymeric components and non-polymeric ingredients of the present invention. For example, the polymeric components and non-polymeric ingredients may be added to a melt mixer, such as, for example, a single or twin-screw extruder; a blender; a single or twin-screw kneader; a Haake mixer, a Brabender mixer, a Banbury mixer, or a roll mixer, either simultaneously by a single step addition, or in a stepwise fashion, and then melt-mixed. When adding the polymeric components and non-polymeric ingredients in a stepwise fashion, a portion of the polymeric components and/or non-polymeric ingredients are first added and melt-mixed. The remaining polymeric components and non-polymeric ingredients are subsequently added and the composition is further melt-mixed until a well-blended composition is obtained.

In another aspect, the present invention relates to a method for manufacturing an article by shaping the flame retardant composition of the invention and the article prepared therefrom. By "shaping", it is meant any shaping technique known to those skilled in the art, such as for example extrusion, injection molding, thermoform molding, compression molding, blow molding, rotational molding, melt casting and slush molding. Preferably, the article is shaped by extrusion.

Due to the combination of high abrasion resistance and strippability, the flame retardant compositions according to the present invention are particularly suited for producing an insulating layer. The flame retardant composition described herein is particularly suited for producing a wire or cable coated with the flame retardant composition and even more particularly for producing a wire or cable useful in automotive applications. Thus, an aspect of the invention is a wire or cable comprising a coating comprising the flame retardant compositions described herein. Indeed, the flame retardant compositions described herein have the particular advantage of combining good chemical and temperature resistance, good abrasion resistance, good strippability and good retention of physical properties, particularly elongation, after long-term heat aging in air at temperatures as high as 150°C. This unique combination of properties makes the compositions of the invention very attractive candidates for use in wire and cable applications and especially in wire and cable constructions for use in automotive applications. Indeed, wire and cable used in automotive applications is subjected to high temperature and to mechanical abrasion caused by engine vibration and motion of the vehicle during normal use, resulting in deterioration of the wire and cable structures with use and time. Wires and cables may be coated with the flame retardant compositions described herein by processes known in the art such as for example by an extrusion process wherein the flame retardant compositions are extruded over the wires and cables at high speed using a single screw extruder with a tubular die.

The flame retardant compositions described herein combine good abrasion resistance and good strip characteristics while maintaining good mechanical properties. The ultra-high molecular weight polysiloxanes that are described herein are advantageously used as additives to improve abrasion resistance of flame retardant polyester compositions, particularly in the production of insulating layers for wire and cable constructions.

Thus, an aspect of the invention is a use of from 0.05 to 1.75 weight percent, based on the total weight of the flame retardant composition, of an ultra-high molecular weight polysiloxane as additive in a flame retardant composition comprising a) the thermoplastic vulcanizate described herein and b) from 1 to 30 weight percent, based on the total weight of the flame retardant composition, of the at least one flame retardant described herein for improving the abrasion resistance of an insulating layer comprising said composition and the ultra-high molecular weight siloxane.

Also described herein is a use of a flame retardant composition comprising a) the thermoplastic vulcanizate composition described herein, b) from 1 to 30 weight percent, based on the total weight of the flame retardant composition, of the at least one flame retardant described herein and c) from 0.05 to 1.75 weight percent, based on the total weight of the flame retardant composition, of the ultra-high molecular weight polysiloxane described herein for manufacturing an abrasion resistant cable or wire, wherein the abrasion resistant cable or wire comprises a coating made of the flame retardant composition. Also described herein is a use of a cable or wire comprising a coating made of a flame retardant composition comprising a) the thermoplastic vulcanizate composition described herein, b) from 1 to 30 weight percent, based on the total weight of the flame retardant composition, of the at least one flame retardant described herein and c) from 0.05 to 1.75 weight percent, based on the total weight of the flame retardant composition, of the ultra-high molecular weight polysiloxane described herein in an abrasive environment. As described above, examples of abrasive environments are automotive applications wherein the cable or wire is subjected to high temperature and to mechanical abrasion caused by engine vibration and motion of the vehicle during normal use.

Thus, an aspect of the invention is a use of from 0.05 to 1.75 weight percent, based on the total weight of the flame retardant composition, of an ultra-high molecular weight polysiloxane as an additive in a flame retardant composition comprising a) the thermoplastic vulcanizate described herein and b) from 1 to 30 weight percent, based on the total weight of the flame retardant composition, of the at least one flame retardant described herein for improving the abrasion resistance and strip force of an insulating layer comprising said composition and the ultra-high molecular weight siloxane. Also described herein is a use of a flame retardant composition comprising a) the thermoplastic vulcanizate composition described herein, b) from 1 to 30 weight percent, based on the total weight of the flame retardant composition, of the at least one flame retardant described herein and c) from 0.05 to 1.75 weight percent, based on the total weight of the flame retardant composition, of the ultra-high molecular weight polysiloxane described herein for manufacturing an abrasion resistant and strippable cable or wire, wherein the abrasion resistant and strippable cable or wire comprises a coating made of the flame retardant composition.

Thus, an aspect of the invention is a method for improving abrasion resistance of an insulating layer of a wire or cable, the insulating layer comprising a flame retardant composition comprising a) the thermoplastic vulcanizate described herein and b) at least one flame retardant as described herein, said method comprising a step of melt blending the ultra-high molecular weight polysiloxane described herein with the thermoplastic vulcanizate composition and applying said composition to a wire or cable.

Thus, an aspect of the invention is a method for improving abrasion resistance and strip force of an insulating layer of a wire or cable, the insulating layer comprising a flame retardant composition comprising a) the thermoplastic vulcanizate described herein and b) at least one flame retardant as described herein, said method comprising a step of melt blending the ultra-high molecular weight polysiloxane described herein with the thermoplastic vulcanizate composition and applying said composition to a wire or cable.

Preferably, an insulating layer made of the flame retardant composition of the invention possesses a scrape abrasion resistance of at least 100 cycles as measured according to ISO 6722:2002 (paragraph 9.3) using a 7 Newton load and a needle having a diameter of 0.45 mm. More preferably, an insulating layer made of the flame retardant composition described herein possesses a scrape abrasion resistance of at least 100 cycles as measured according to ISO 6722:2002 (paragraph 9.3) using a 7 Newton load and a needle having a diameter of 0.45 mm and possesses a strip force less than 70 N as measured according to ISO 6722:2002.

The invention is further described in the Examples below, which are provided to describe the invention in further detail. These examples, which set forth a preferred mode presently contemplated for carrying out the invention, are intended to illustrate and not to limit the invention.

### EXAMPLES

The following materials were used for preparing an insulating composition according to the present invention and a comparative example.

### Materials

Thermoplastic vulcanizate (TPV): a vulcanizate blend containing about 50.2 weight percent of a copolyetherester elastomer component and a rubber component, the weight percentage being based on the total weight of the vulcanizate blend. The copolyetherester elastomer comprised about 15.8 weight percent of poly(tetramethylene oxide) having an average molecular weight of about 1000 g/mol as polyether block segments, the weight percentage being based on the total weight of the copolyetherester elastomer, the short chain ester units of the copolyetherester being polybutylene terephthalate segments. The rubber component was an ethylene methyl acrylate copolymer comprising 62 weight percent of methyl acrylate, the weight percentage being based on the total weight of the copolymer. The rubber was crosslinked using about 3.4 weight percent of 2,5-dimethyl-2,5-di-(t-butylperoxy) hexyne-3 (DYBP) as peroxide curative and about 4.6 weight percent of an organic multiolefinic co-agent cure system, specifically a diethylene glycol dimethacrylate (DEGDM) cure system using a dynamic vulcanization process in a melt extruder as described in the detailed description and in Intl. Patent Appln. Publn. No. WO 2004/029155.

As required for the manufacturing process and well-known to those skilled in the art, the thermoplastic vulcanizate contained up to 3 weight percent of heat stabilizers, antioxidants and metal deactivators and up to 2 wt percent of a color concentrate. The thermoplastic vulcanizate comprised about 2 weight percent of suitable heat stabilizers and/or antioxidants including diphenylamines, amides, thioesters, phenolic antioxidants and/or phosphites.

Ultra high molecular weight polysiloxane: MB 50-010, an ultra-high molecular weight polydimethylsiloxane dispersed in a copolyetherester elastomer at a siloxane content of 50 weight percent, available from Dow Corning Corporation. This ultra-high molecular weight polydimethylsiloxane corresponds to the polydimethylsiloxane of formula (G).

Flame retardant: Exolit® OP935, an aluminum salt of diethylene phosphinate having a D90 max of 7.506 microns, available from Clariant International Ltd.

### Comparative additives:

Licolub® WE40P, an ester of montanic acids with multifunctional alcohols, available from Clariant International Ltd.

Tegomer® C-Si2342, an organo-modified siloxane (PDMS with with carboxylated end groups) available from Degussa-Goldschmidt GmbH. Hi-Wax 1105: MAAH ethylene-propylene wax, available from Mitsui Chemicals, Inc..

### Test Methods

Abrasion resistance was determined by the scrape abrasion specification according to ISO 6722:2002 (paragraph 9.3) using a 7 Newton load, a needle having a diameter of 0.45 mm and at a frequency of 55 ±5 cycles/min. Scrape abrasion resistance was measured on copper cables that had been coated with the compositions according to the present invention (E1-E2) and the comparative compositions (Comparative Examples C1-C6) so as to form coated copper wires having a diameter of 1.65 mm. Coated cables were prepared on a Nextrom 45mm 30:1 L/D pressure extrusion line at a die temperature of 240°C. The compositions were extruded directly on a stranded 7x0.32mm red annealed copper cable of 0.935 mm diameter as the conductive core thus producing a single insulating layer with a wall thickness of 0.35 +-0.3 mm.

Results are expressed in numbers of cycles to failure and correspond to the average value of three test specimens.

Strip force measurements were performed according to ISO 6722:2002.

The strip force of an insulated wire is the axial force expressed in Newtons required to remove a given length of insulation from the wire, i.e. the force necessary to break the adhesive bond between the insulation and the wire conductor. Strip force measurements were performed on test specimens (coated cables) prepared as described above with respect to the preparation of samples for abrasion resistance testing. Results are expressed in Newtons and correspond to the average value of three test specimens.

Flammability testing was performed according to UL 94 test standard, 20 mm vertical burning test. Test specimens were formed from compositions of the invention (Examples 1 and 2 (E1-E2)) and from comparative compositions (Comparative Examples C1-C6) by injection molding the compositions in the form of test bars of dimensions 125 mm long by 13 mm wide by 0.8 mm thick. Before measurement, the test specimens were conditioned for 48 hours at 23°C and 50% relative humidity. According to this procedure test specimens were clamped with the longitudinal axis vertical, so that the lower end of each of the specimens was 300 mm above a horizontal layer of dry absorbent surgical cotton. A burner producing a blue flame 20 mm high was placed such that the flame was applied centrally to the mid-point of the bottom edge of the specimen being tested for 10 seconds. After the application of the flame to the specimen for 10 seconds, the burner was withdrawn from the sample and the after-flame time, t₁, was measured. When after-flaming of the test specimen ceased, the burner was again placed under the specimen for an additional 10 seconds. The flame was then withdrawn from the test specimens and the second after-flame time, t₂, was measured. Materials are classified according to the test specifications as V-0, V-1 or V-2, based on the behavior of the material during burning, V-2 being the least demanding classification.

### Examples 1 and 2 (E1-E2) and Comparative Examples (C1-C6)

Flame retardant compositions of the invention Examples 1 and 2 (E1-E2) were prepared as follows. The above-described TPV composition, flame retardant and ultra-high molecular weight polysiloxane, in the amounts listed in Table 1 were melt blended in a 40 mm twin screw extruder (Berstorff ZE40) operated at a temperature of about 230°C to about 240°C using a screw speed of about 300 rpm, and a throughput of 90-110 kg/hour. The melt temperature was approximately 275 ± 10°C. Quantities shown in Table 1 are presented in weight percent on the basis of the total weight of the composition.

The compounded mixture was extruded in the form of laces or strands which were then cooled in a water bath, chopped into granules and placed in sealed aluminum lined bags in order to prevent moisture pick-up.

The compositions of Comparative Examples C1-C6 were prepared in a similar manner. These comparative compositions did not contain ultra-high molecular weight polysiloxane. Components of the C1-C6 compositions are shown in Table 1.

Results of abrasion resistance testing, strip force testing, and flammability testing, performed as described above, are reported in Table 1.

**Table 1**

| | C1 | C2 | C3 | C4 | C5 | C6 | E1 | E2 |
|---|---|---|---|---|---|---|---|---|
| Thermoplastic Vulcanizate (wt.%) | 88 | 85 | 84.5 | 84.5 | 84.5 | 81 | 83 | 85 |
| Flame retardant (wt.%) | 12 | 15 | 15 | 15 | 15 | 15 | 15 | 12 |
| Licolub® WE40P (wt.%) | - | - | 0.5 | - | - | - | - | - |
| Tegomer® CSi2342 (wt.%) | - | - | - | 0.5 | - | - | - | - |
| Hi-Wax 1105 (wt.%) | - | - | - | - | 0.5 | - | - | - |
| Ultra-high molecular weight polysiloxane (wt.%) | - | - | - | - | - | 4 | 2 | 3 |
| Abrasion resistance/cycles | 94 | 67 | 37 | 38 | 120 | 17 | 83 | 175 |
| Strip force /N Speed: 50 mm/min // 250 mm/min | NA // 74 | 72 // 93 | 70 // NA | 66 // NA | 68 // NA | 19//25 | 50 // NA | NA // 43 |
| Flammability testing | V2 | V2 | NA | NA | NA | NA | NA | V2 |

As indicated in Table 1, the incorporation of conventional additives (C3-C5) such as lubricants, mold-release agents or surface modifiers in a flame retardant composition (C3-C5) did not produce cables exhibiting a combination of an improved abrasion resistance and improved strip characteristics compared to Comparative Example C2.

The incorporation of 4 wt.% of a masterbatch comprising 50% of an ultra-high molecular weight polysiloxane in a flame retardant composition (C6) did not produce a flame retardant compositions that exhibited a combination of improved abrasion resistance and improved strip characteristics compared to Comparative Example C2. Although the incorporation of 4 wt.% of a masterbatch comprising 50% of an ultra-high molecular weight polysiloxane in a flame retardant composition resulted in production of cables having improved strip characteristics the test specimens exhibited significantly reduced abrasion resistance (17 cycles vs.67 cycles).

The incorporation of 2 wt.% of a masterbatch comprising 50% of an ultra-high molecular weight polysiloxane in a flame retardant composition produced a cable coated with a composition E1 that exhibited a combination of improved abrasion resistance (83 cycles vs. 67 cycles) and improved strip characteristics compared to C2.

The incorporation of 3 wt.% of a masterbatch comprising 50% of an ultra-high molecular weight polysiloxane in a flame retardant composition produced a cable coated with a composition E2 that exhibited comparative flame retardance performance relative to C1 and a combination of improved abrasion resistance (175 cycles vs. 94 cycles) and improved strip characteristics compared to C1.

## Claims

1. A flame retardant composition comprising
A. a thermoplastic vulcanizate composition comprising:
1. from 15 to 75 weight percent of a continuous phase comprising at least one thermoplastic polyester and
2. from 25 to 85 weight percent of a dispersed phase comprising at least one peroxide-cured elastomer selected from the group consisting of polyacrylate rubbers, polymethacrylate rubbers, polyethylene/polyacrylate rubbers, and polyethylene/polymethacrylate rubbers; wherein said rubber is dynamically crosslinked with at least one peroxide free radical initiator and at least one organic multiolefinic co-agent;
the weight percentages of the continuous phase and the dispersed phase being based on the total combined weight of the continuous and dispersed phases,
B. from 1 to 30 weight percent, based on the total weight of the flame retardant composition, of at least one flame retardant selected from the group consisting of phosphinates of formula I, diphosphinates of formula II, polymers thereof and combinations of two or more thereof 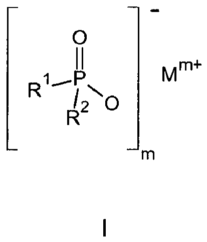 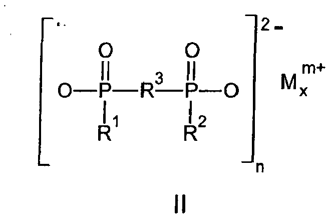 wherein R¹ and R² are independently selected from hydrogen, linear or branched C₁ -C₆ alkyl groups, and aryl groups; R³ is a linear or branched C₁-C₁₀-alkylene group, a C₆-C₁₀-arylene group, a C₆-C₁₀-alkylarylene a C₆-C₁₀-arylalkylene group; M is a metal ion selected from the group of calcium ions, magnesium ions, aluminum ions, zinc ions, and mixtures thereof, m is 2 to 3; n is 1 or 3; and x is 1 or 2; with the proviso that when m is 2, then x and n are each 1, and when m is 3, x is 2 and n is 3;
and
C. from 0.05 to 1.75 weight percent, based on the total weight of the flame retardant composition, of an ultra-high molecular weight polysiloxane which is a polysiloxane having a weight average molecular weight (Mw) of at least 100,000, the weight average molecular weight (Mw) being determined by gel permeation chromatography (GPC).

2. A flame retardant composition of claim 1, wherein the ultra-high molecular weight polysiloxane is an ultra-high molecular weight polysiloxane of the formula 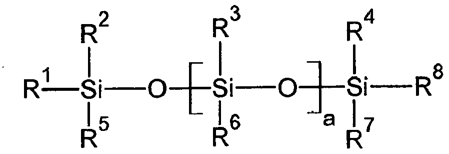 wherein R¹, R², R³, R⁴, R⁵, R⁶, R⁷ and R⁸ are identical or different and are an alkyl, vinyl, chloroalkyl, fluororalkyl, aminoalkyl, epoxy, chloro, fluoro, or hydroxy, and a is 500 or greater.

3. A flame retardant composition according to claim 2, wherein the ultra-high molecular weight polysiloxane is a polydimethylsiloxane of the formula 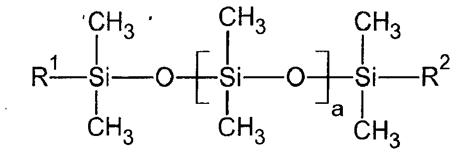 wherein R¹ and R² are identical or different and are selected from the group consisting of alkyl groups, vinyl groups, chloroalkyl groups, aminoalkyl groups, epoxy groups, fluororalkyl groups, chloro groups, fluoro groups, and hydroxy groups, and wherein a is 500 or greater.

4. The flame retardant composition of claim 2 or 3, wherein the ultra-high molecular weight polysiloxane is a polydimethylsiloxane of formula 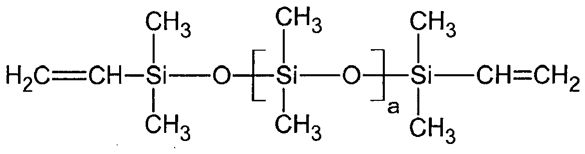 wherein a is 1350 or greater.

5. The flame retardant composition of any preceding claim, wherein the at least one flame retardant is selected from the group consisting of aluminum methylethylphosphinate, aluminum diethyl phosphinate and zinc diethyl phosphinate.

6. The flame retardant composition of any preceding claim, wherein the at least one free-radical initiator is selected from the group consisting of 2,5-dimethyl-2,5-di-(*t*-butylperoxy)hexyne-3, *t*-butyl peroxybenzoate, 2,5-dimethyl-2,5-di-(*t*-butylperoxy)hexane, dicumyl peroxide, α,α-bis(*t-*butylperoxy)-2,5-dimethylhexane and mixtures thereof.

7. The flame retardant composition of any preceding claim, wherein the at least one organic multiolefinic co-agent is selected from the group consisting of diethylene glycol diacrylate, ethylene glycol dimethacrylate, diethylene glycol dimethacrylate, N,N'-m-phenylene dimaleimide, triallylisocyanurate, trimethylolpropane trimethacrylate, tetraallyloxyethane, triallyl cyanurate, tetramethylene diacrylate, polyethylene glycol dimethacrylate, and mixtures thereof.

8. The flame retardant composition of any preceding claim, wherein the at least one thermoplastic polyester continuous phase comprises a copolyetherester elastomer prepared from monomers comprising (1) poly(tetramethylene oxide) glycol; (2) a dicarboxylic acid selected from the group consisting of isophthalic acid, terephthalic acid and mixtures thereof; and (3) a diol selected from the group consisting of 1,4-butanediol, 1,3-propanediol and mixtures thereof.

9. The flame retardant composition of any preceding claim, wherein the flame composition comprises at least one amorphous polymer.

10. The flame retardant composition according to claim 9, wherein the at least one amorphous polymer is selected from the group consisting of polycarbonates, polyarylates, amorphous polyester copolymers, polymethylmethacrylate, and mixtures thereof.

11. The flame retardant composition of any preceding claim, wherein the flame retardant composition comprises one or more heat stabilizers.

12. The flame retardant composition of any preceding claim, wherein the composition comprises one or more antioxidants.

13. The flame retardant composition of any preceding claim, wherein the composition comprises one or more metal deactivators.

14. A wire or cable comprising a coating comprising the flame retardant composition recited in any one of claims 1 to 13.

## Patentansprüche

1. Flammhemmende Zusammensetzung umfassend
A. eine thermoplastische Vulkanisatzusammensetzung umfassend:
1. 15 bis 75 Gewichtsprozent einer kontinuierlichen Phase umfassend mindestens einen thermoplastischen Polyester und
2. 25 bis 85 Gewichtsprozent einer dispergierten Phase umfassend mindestens ein mit Peroxid ausgehärtetes Elastomer ausgewählt aus der Gruppe bestehend aus Polyacrylatkautschuken, Polymethacrylatkautschuken, Polyethylen-Polyacrylatkautschuken und Polyethylen-Polymethacrylatkautschuken; wobei der Kautschuk dynamisch mit mindestens einem peroxidfreien Radikalinitiator und mindestens einem organischen multiolefinischen Koagens vernetzt wird;
die Gewichtsprozentsätze der kontinuierlichen Phase und der dispergierten Phase auf das gesamte kombinierte Gewicht der kontinuierlichen und dispergierten Phasen bezogen sind,
B. 1 bis 30 Gewichtsprozent, auf das Gesamtgewicht der flammhemmenden Zusammensetzung bezogen, mindestens eines Flammverzögerungsmittels, ausgewählt aus der Gruppe bestehend aus Phosphinaten der Formel I, Diphosphinaten der Formel II, Polymeren davon und Kombinationen von zwei oder mehreren davon 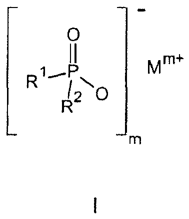 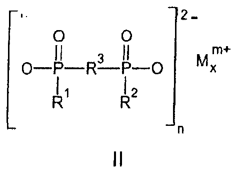 wobei R¹ und R² unabhängig unter Wasserstoff, linearen oder verzweigten C₁-C₆-Alkylgruppen und -Aryl gruppen ausgewählt sind; R³ eine lineare oder verzweigte C₁-C₁₀-Alkylengruppe, eine C₆-C₁₀-Arylengruppe, eine C₆-C₁₀-Alkylarylengruppe, eine C₆-C₁₀-Arylalkylengruppe ist; M ein Metallion ist ausgewählt aus der Gruppe von Calciumionen, Magnesiumionen, Aluminiumionen, Zinkionen und Mischungen davon, m 2 bis 3 beträgt; n 1 oder 3 beträgt; und x 1 oder 2 beträgt; mit der Maßgabe, dass, wenn m 2 beträgt, x und n jeweils 1 betragen, und wenn m 3 beträgt, x 2 und n 3 beträgt;
und
C. 0,05 bis 1,75 Gewichtsprozent, auf das Gesamtgewicht der flammhemmenden Zusammensetzung bezogen, eines ultrahochmolekularen Polysiloxans, das ein Polysiloxan ist, das ein gewichtsdurchschnittliches Molekulargewicht (Mw) von mindestens 100.00 aufweist, wobei das gewichtsdurchschnittliche Molekulargewicht (Mw) durch Gelpermeationschromatographie (GPC) bestimmt wird.

2. Flammhemmende Zusammensetzung nach Anspruch 1, wobei das ultrahochmolekulare Polysiloxan ein ultrahochmolekulares Polysiloxan der Formel 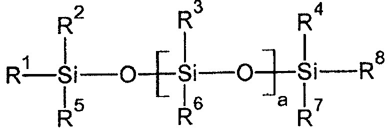 ist, wobei R¹, R², R³, R⁴, R⁵, R⁶, R⁷ und R⁸ identisch oder verschieden und ein Alkyl, Vinyl, Chloralkyl, Fluoralkyl, Aminoalkyl, Epoxy, Chlor, Fluor oder Hydroxy sind und a 500 oder mehr beträgt.

3. Flammhemmende Zusammensetzung nach Anspruch 2, wobei das ultrahochmolekulare Polysiloxan ein Polydimethylsiloxan der Formel 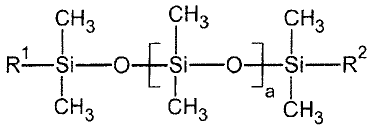 ist, wobei R¹ und R² identisch oder verschieden und aus der Gruppe ausgewählt sind bestehend aus Alkylgruppen, Vinylgruppen, Chloralkylgruppen, Aminoalkylgruppen, Epoxygruppen, Fluoralkylgruppen, Chlorgruppen, Fluorgruppen und Hydroxygruppen und wobei a 500 oder mehr beträgt.

4. Flammhemmende Zusammensetzung nach Anspruch 2 oder 3, wobei das ultrahochmolekulare Polysiloxan ein Polydimethylsiloxan der Formel 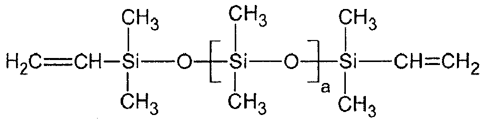 ist, wobei a 1350 oder mehr beträgt.

5. Flammhemmende Zusammensetzung nach einem der vorhergehenden Ansprüche, wobei das mindestens eine flammhemmende Mittel aus der Gruppe ausgewählt ist bestehend aus Aluminiummethylethylphosphinat, Aluminiumdiethylethylphosphinat und Zinkdiethylphosphinat.

6. Flammhemmende Zusammensetzung nach einem der vorhergehenden Ansprüche, wobei der mindestens eine Radikalinitiator aus der Gruppe ausgewählt ist bestehend aus 2,5-Dimethyl-2,5-di-(tert.-butylperoxy)hexyn-1, tert-Butylperoxybenzoat, 2,5-Dimethyl-2,5-di-(tert-butylperoxy)hexan, Dicumylperoxid, α,α-Bis(tert-butylperoxy)-2,5-dimethylhexan und Mischungen davon.

7. Flammhemmende Zusammensetzung nach einem der vorhergehenden Ansprüche, wobei das mindestens eine organische multiolefinische Koagens aus der Gruppe ausgewählt ist bestehend aus Diethylenglycoldiacrylat, Ethylenglycoldimethacrylat, Diethylenglycoldimethacrylat, N,N'-m-Phenylendimaleimid, Triallylisocyanurat, Trimethylolpropantrimethacrylat, Tetraallyloxyethan, Triallylcyanurat, Tetramethylendiacrylat, Polyethylenglycoldimethacrylat und Mischungen davon.

8. Flammhemmende Zusammensetzung nach einem der vorhergehenden Ansprüche, wobei die mindestens eine kontinuierliche Phase von thermoplastischem Polyester ein Copolyetheresterelastomer ist, das aus Monomeren hergestellt ist, umfassend (1) Poly(tetramethylenoxid)glycol, (2) eine Dicarbonsäure ausgewählt aus der Gruppe bestehend aus Isophthalsäure, Terephthalsäure und Mischungen davon; und (3) ein Diol ausgewählt aus der Gruppe bestehend aus 1,4-Butandiol. 1,3-Propandiol und Mischungen davon.

9. Flammhemmende Zusammensetzung nach einem der vorhergehenden Ansprüche, wobei die flammhemmende Zusammensetzung mindestens ein amorphes Polymer umfasst.

10. Flammhemmende Zusammensetzung nach Anspruch 9, wobei das mindestens eine amorphe Polymer aus der Gruppe ausgewählt ist bestehend aus Polycarbonaten, Polyarylaten, amorphen Polyestercopolymeren, Polymethylmethacrylat und Mischungen davon.

11. Flammhemmende Zusammensetzung nach einem der vorhergehenden Ansprüche, wobei die flammhemmende Zusammensetzung einen oder mehrere Wärmestabilisatoren umfasst.

12. Flammhemmende Zusammensetzung nach einem der vorhergehenden Ansprüche, wobei die Zusammensetzung ein oder mehrere Antioxidationsmittel umfasst.

13. Flammhemmende Zusammensetzung nach einem der vorhergehenden Ansprüche, wobei die Zusammensetzung einen oder mehrere Metalldeaktivatoren umfasst.

14. Draht oder Kabel umfassend eine Beschichtung umfassend die flammhemmende Zusammensetzung, die in einem der Ansprüche 1 bis 13 angegeben ist.

## Revendications

1. Composition ignifuge comprenant
A. une composition de vulcanisat thermoplastique comprenant:
1. de 15 à 75 pour cent en poids d'une phase continue comprenant au moins un polyester thermoplastique et
2. de 25 à 85 pour cent en poids d'une phase dispersée comprenant au moins un élastomère durci avec un peroxyde sélectionné dans le groupe constitué des caoutchoucs de polyacrylate, des caoutchoucs de polyméthacrylate, des caoutchoucs de polyéthylène/polyacrylate, et des caoutchoucs de polyéthylène/polyméthacrylate; où ledit caoutchouc est réticulé de manière dynamique avec au moins un initiateur peroxyde de radicaux libres et au moins un co-agent multioléfinique organique;
les pourcentages en poids de la phase continue et de la phase dispersée étant basés sur le poids total combiné des phases continue et dispersée,
B. de 1 à 30 pour cent en poids, sur la base du poids total de la composition ignifuge, d'au moins un agent ignifuge sélectionné dans le groupe constitué des phosphinates de formule I, des diphosphinates de formule II, de leurs polymères et des combinaisons de deux ou plusieurs d'entre eux 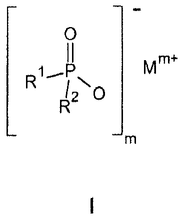 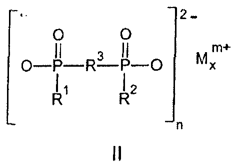 où R¹ et R² sont indépendamment sélectionnés parmi l'hydrogène, les groupes alkyle en C₁ à C₆ linéaires ou ramifiés, et les groupes aryle; R³ est un groupe alcylène en C₁ à C₁₀ linéaire ou ramifié, un groupe arylène en C₆ à C₁₀, un groupe alkylarylène en C₆ à C₁₀, un groupe arylalcylène en C₆ à C₁₀; M est un ion métallique sélectionné dans le groupe des ions calcium, des ions magnésium, des ions aluminium, des ions zinc, et de leurs mélanges, m a la valeur de 2 à 3; n a la valeur de 1 ou 3; et x a la valeur de 1 ou 2; à condition que lorsque m a la valeur de 2, alors x et n soient chacun 1, et lorsque m a la valeur de 3, x soit 2 et n soit 3; et
C. de 0,05 à 1,75 pour cent en poids, sur la base du poids total de la composition ignifuge, d'un polysiloxane de poids moléculaire ultra-élevé qui est un polysiloxane ayant un poids moléculaire moyen en poids (Mw) d'au moins 100 000, le poids moléculaire moyen en poids (Mw) étant déterminé par chromatographie par perméation sur gel (CPG).

2. Composition ignifuge selon la revendication 1, le polysiloxane de poids moléculaire ultra-élevé étant un polysiloxane de poids moléculaire ultra-élevé de formule 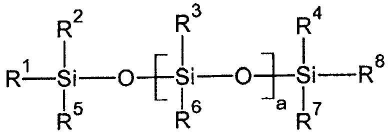 où R¹, R², R³, R⁴, R⁵, R⁶, R⁷ et R⁸ sont identiques ou différents et sont un groupe alkyle, vinyle, chloroalkyle, fluororalkyle, aminoalkyle, époxy, chloro, fluoro, ou hydroxyle, et a est 500 ou plus.

3. Composition ignifuge selon la revendication 2, où le polysiloxane de poids moléculaire ultra-élevé est un polydiméthylsiloxane de formule 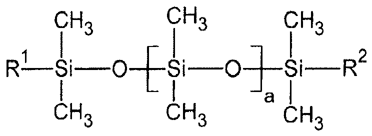 où R¹ et R² sont identiques ou différents et sont sélectionnés dans le groupe constitué des groupes alkyle, des groupes vinyle, des groupes chloroalkyle, des groupes aminoalkyle, des groupes époxy, des groupes fluororalkyle, des groupes chloro, des groupes fluoro, et des groupes hydroxyle, et où a est 500 ou plus.

4. Composition ignifuge selon la revendication 2 ou 3, le polysiloxane de poids moléculaire ultra-élevé étant un polydiméthylsiloxane de formule 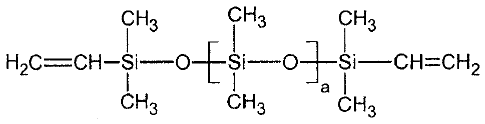 où a est 1 350 ou plus.

5. Composition ignifuge selon l'une quelconque des revendications précédentes, où le au moins un agent ignifuge est sélectionné dans le groupe constitué du méthyléthylphosphinate d'aluminium, du diéthyl phosphinate d'aluminium et du diéthyl phosphinate de zinc.

6. Composition ignifuge selon l'une quelconque des revendications précédentes, le au moins un initiateur de radicaux libres étant sélectionné dans le groupe constitué du 2,5-diméthyl-2,5-di-(*t*-butylperoxy)hexyne-3, du peroxybenzoate de *t*-butyle, du 2,5-diméthyl-2,5-di-(*t*-butylperoxy)hexane, du peroxyde de dicumyle, du α,α-bis(*t-*butylperoxy)-2,5-diméthylhexane et de leurs mélanges.

7. Composition ignifuge selon l'une quelconque des revendications précédentes, le au moins un co-agent multioléfinique organique étant sélectionné dans le groupe constitué du diacrylate de diéthylène glycol, du diméthacrylate d'éthylène glycol, du diméthacrylate de diéthylène glycol, du N,N'-*m*-phénylène dimaléimide, de l'isocyanurate de triallyle, du triméthacrylate de triméthylolpropane, du tétraallyloxyéthane, du cyanurate de triallyle, du diacrylate de tétraméthylène, du diméthacrylate de polyéthylène glycol, et de leurs mélanges.

8. Composition ignifuge selon l'une quelconque des revendications précédentes, où la au moins une phase continue polyester thermoplastique comprend un élastomère de copolyétherester préparé à partir des monomères comprenant (1) du poly(oxyde de tétraméthylène) glycol; (2) un acide dicarboxylique sélectionné dans le groupe constitué de l'acide isophtalique, de l'acide téréphtalique et de leurs mélanges; et (3) un diol sélectionné dans le groupe constitué du 1,4-butanediol, du 1,3-propanediol et de leurs mélanges.

9. Composition ignifuge selon l'une quelconque des revendications précédentes, où la composition ignifuge comprend au moins un polymère amorphe.

10. Composition ignifuge selon la revendication 9, où le au moins un polymère amorphe est sélectionné dans le groupe constitué des polycarbonates, des polyarylates, des copolymères amorphes de polyester, du poly(méthacrylate de méthyle), et de leurs mélanges.

11. Composition ignifuge selon l'une quelconque des revendications précédentes, la composition ignifuge comprenant un ou plusieurs stabilisants thermiques.

12. Composition ignifuge selon l'une quelconque des revendications précédentes, la composition comprenant un ou plusieurs antioxydants.

13. Composition ignifuge selon l'une quelconque des revendications précédentes, la composition comprenant un ou plusieurs désactivateurs métalliques.

14. Fil ou câble comprenant un revêtement comprenant la composition ignifuge énoncée selon l'une quelconque des revendications 1 à 13.
